# EUROPEAN PATENT SPECIFICATION

(11) **EP 4 279 331 B1**
(45) Date of publication and mention of the grant of the patent: **08.07.2026**
(21) Application number: 23174036.6
(22) Date of filing: 17.05.2023
(51) Int. Cl.: B60N 2/07, F16C 29/04, F16C 33/38

(54) **UNIVERSAL BALL BEARING CARRIAGE FOR SEAT TRACK ASSEMBLY**
UNIVERSALER KUGELLAGERSCHLITTEN FÜR SITZSCHIENENZUSAMMENBAU
CHARIOT UNIVERSEL À ROULEMENT À BILLES POUR ENSEMBLE GLISSIÈRE DE SIÈGE

(30) Priority: 19.05.2022 US 202263343781 P
(43) Date of publication of application: 22.11.2023
(73) Proprietor: Camaco, LLC, Farmington Hills, MI 48331 (US)
(72) Inventor: Carroll, Jeff, West Bloomfield, 48323 (US); Vakil, Sanjay, Troy, 48083 (US); Cao, Yang, Troy, 49098 (US); Jolly, Prateek, Farmington Hills, 48331 (US); Smith, Owen, Waterford, 48329 (US); Akkineni, Pradeep, Northville, 48167 (US); Bijwe, Harish, Novi, 48375 (US)
(74) Representative: Barker Brettell LLP

(56) References cited:
- US-A1- 2019 001 842
- US-B1- 6 364 086

## Description

### CROSS-REFERENCE TO RELATED PATENT APPLICATIONS

This inventiom claims the benefit of and priority to U.S. Provisional Patent Application No. 63/343,781, filed May 19, 2022.

### BACKGROUND

A typical vehicle includes a cabin that has a seat assembly that accommodates and supports an occupant. The seat assembly includes a seat and a track assembly that secures the seat to a floor of the cabin. The track assembly may facilitate repositioning the seat between a plurality of positions (i.e., translate the seat forward or backward). US 2019/001842 discloses a bearing cage for a seat rail pair of a vehicle seat, which has two interconnected cage elements which are axially symmetrical and accommodate a number of rolling bodies. A connecting element is arranged between the cage elements at longitudinal sides of said cage elements, which face toward one another. The connecting element runs parallel to an axis of symmetry and is of mechanically flexible. The connecting element is in the form of a spring. The cage elements form spring limbs which are pivotable about the axis of symmetry. A seat rail pair for a vehicle seat, in particular a motor vehicle seat, is also disclosed and includes at least one such bearing cage. US 6,364,086 discloses a chain of rolling elements which comprises a plurality of rolling elements and an elongate carrier belt with a plurality of recesses for receiving the rolling elements, a plurality of retainers for retaining the rolling elements received in the recesses and at least one elongate flexible element for connecting the retainers. The carrier belt comprises two lateral edge portions and a central portion connecting them, the retainers being connected to the at least one flexible element in the lateral edge regions of the carrier belt. Separate retainers are associated with successive rolling elements, at least one retainer associated with each rolling element being provided on the at least one flexible element in the longitudinal direction thereof before and after each rolling element.

### SUMMARY

One embodiment relates to a carriage for a seat track assembly. The carriage includes an elongated body having a first end and an opposing second end and a flange coupled to the first end of the elongated body. The flange includes a first portion and a second portion extending from the first portion at an angle. The first portion has a first face and an opposing second face. The first portion defines a first aperture having a first diameter. The first portion includes (i) at least two first retainers protruding outward from the first face and extending at least partially over the first aperture and (ii) at least two second retainers protruding outward from the opposing second face and extending at least partially over the first aperture. The at least two first retainers and the at least two second retainers define a second diameter that is less than the first diameter. The second portion has a third face and an opposing fourth face. The second portion defines a second aperture having a third diameter. The second portion includes (i) at least two third retainers protruding outward from the third face and extending at least partially over the second aperture and (ii) at least two fourth retainers protruding outward from the opposing fourth face and extending at least partially over the second aperture. The at least two third retainers and the at least two fourth retainers define a fourth diameter that is less than the third diameter. Optionally, at least one of (i) the first aperture, the at least two first retainers, and the at least two second retainers or (ii) the second aperture, the at least two third retainers, and the at least two fourth retainers may be configured to accommodate ball bearings having diameters between about 4.6 mm and about 5.4 mm.

The first aperture, the two first retainers, and the two second retainers and the second aperture, the two third retainers, and the two fourth retainers may be configured to accommodate ball bearings of different diameters.

The at least two first retainers include only two first retainers and the at least two second retainers include only two second retainers. The two first retainers are rotationally offset 90 degrees relative to the two second retainers.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE DRAWINGS

FIG. 1 is a side view of a vehicle, according to an exemplary embodiment.
FIG. 2 is a perspective view of a cabin of the vehicle of FIG. 1 including a seat, according to an exemplary embodiment.
FIG. 3 is a perspective view of a frame assembly of the seat of FIG. 2 including a seat frame assembly and a track assembly, according to an exemplary embodiment.
FIGS. 4 and 5 are various perspective views of the track assembly of FIG. 3 including an upper rail, a lower rail, and a latch assembly, according to an exemplary embodiment.
FIG. 6 is a perspective view of the track assembly of FIGS. 4 and 5 including the upper rail, the latch assembly, and a carriage assembly, according to an exemplary embodiment.
FIG. 7 is a perspective view of the track assembly of FIGS. 4 and 5 including the lower rail and the latch assembly, according to an exemplary embodiment.
FIG. 8 is a cross-sectional view of the track assembly of FIGS. 4 and 5, according to an exemplary embodiment.
FIG. 9 is a perspective view of the carriage assembly of FIG. 6 including two flanges each having a lower pocket body and an upper pocket body, according to an exemplary embodiment.
FIG. 10 is a front view of one flange of the carriage assembly of FIG. 9, according to an exemplary embodiment.
FIG. 11 is an interior perspective view of the lower pocket body of one of the flanges of FIG. 9, according to an exemplary embodiment.
FIG. 12 is an exterior perspective view of the lower pocket body of FIG. 11, according to an exemplary embodiment.
FIGS. 13 and 14 are cross-sectional views of the lower pocket body and the upper pocket body of the flange of FIG. 10 along lines 13/14 of FIG. 10, according to an exemplary embodiment.
FIGS. 15 and 16 are cross-sectional views of the lower pocket body of the flange of FIG. 10 along lines 15/16 of FIG. 10, according to an exemplary embodiment.

### DETAILED DESCRIPTION

Before turning to the figures, which illustrate certain exemplary embodiments in detail, it should be understood that the present invention is not limited to the details or methodology set forth in the description or illustrated in the figures but by the scope of protection which is defined by the appended claims.

According to an exemplary embodiment, a seat track assembly of the present disclosure includes a carriage assembly that slidably couples an upper rail and a lower rail together. Although designed to interact with one another seamlessly, manufacturing the upper rail and the lower rail can result in imperfections or variations in the profiles thereof that can cause improper interaction or looseness in between, which can permit lateral movement (i.e., up and down or side-to-side) between the upper rail and lower rail. Such imperfections or variations often require track manufacturers to manufacture, stock, and manage a variety of different carriage assemblies that each accommodate different and specific ball bearing diameters. The carriage assembly of the present disclosure not only facilitates this prevention of movement, but also includes a universal carriage that accommodates ball bearings across a wide range of bearing diameters, thereby eliminating the need to manufacture, stock, and manage many different carriage designs.

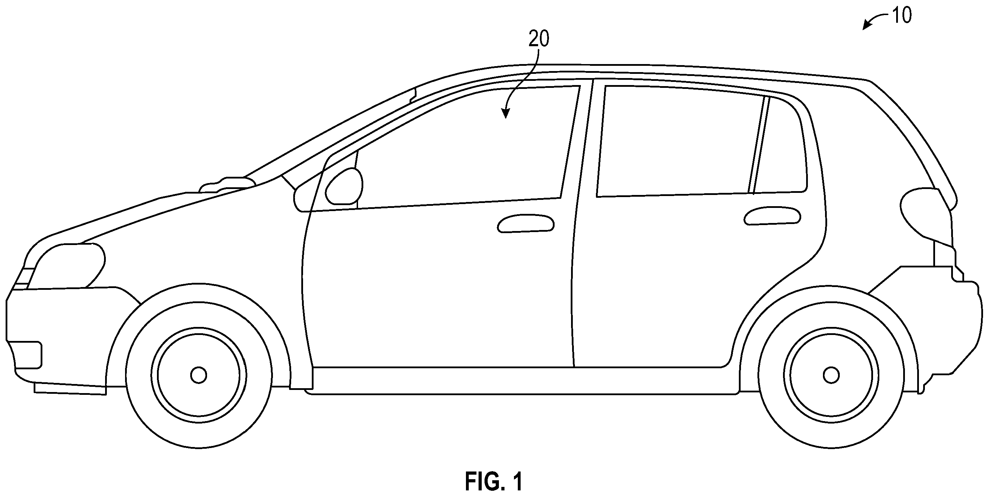

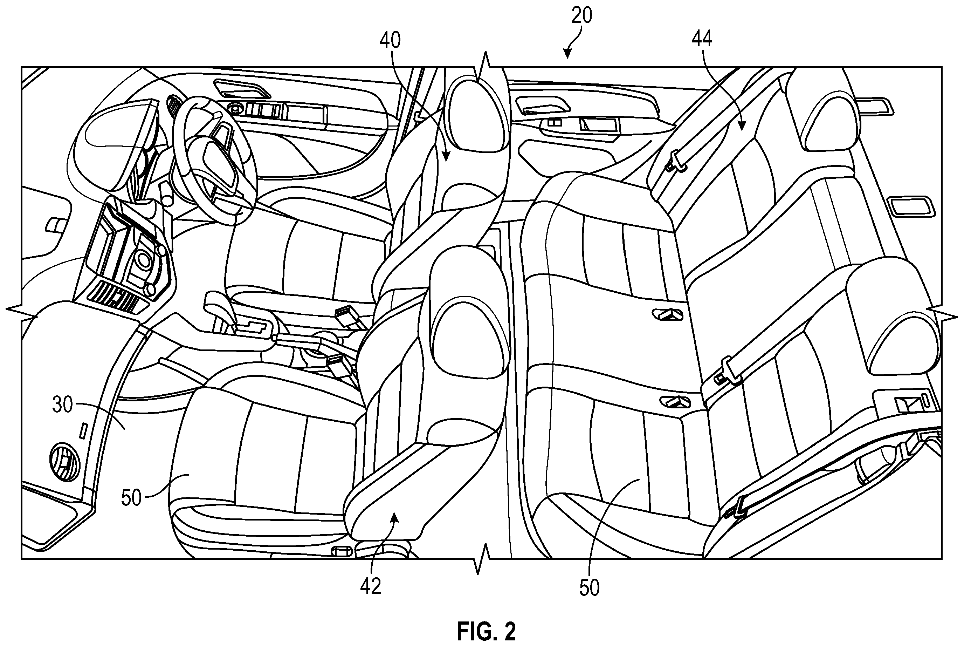

As shown in FIGS. 1 and 2, a vehicle 10 includes an interior cabin, shown as passenger cabin 20. In one embodiment, the vehicle 10 is configured as an on-road vehicle such as a sedan, a sport utility vehicle ("SUV"), a pickup truck, a van, and/or still another type of passenger vehicle. In other embodiments, the vehicle 10 is configured as another type of on-road vehicle such as a semi-truck, a bus, or the like. In still other embodiments, the vehicle 10 is configured as an off-road vehicle such as construction machinery, farming machinery, or the like.

As shown in FIG. 2, the passenger cabin 20 includes a support surface, shown as cabin floor 30, that supports one or more seating assemblies, shown as seats 40, including one or more first seating assemblies, shown as front seats 42, and one or more second seating assemblies, shown as rear seats 44. In some embodiments, the front seats 42 are different than the rear seats 44. In other embodiments, the front seats 42 and the rear seats 44 are the same or utilize similar components (e.g., to facilitate increased scaling for manufacturing and, therefore, a reduction in production costs). By way of example, the front seats 42 and the rear seats 44 may utilize a similar track assembly, however, the track assembly for one of the front seats 42 or the rear seats 44 may include one or more additional components (e.g., for added strength, to meet or exceed industry standards, etc.). In some embodiments, the passenger cabin 20 does not include the rear seats 44. In some embodiments, the passenger cabin 20 only includes a single front seat 42.

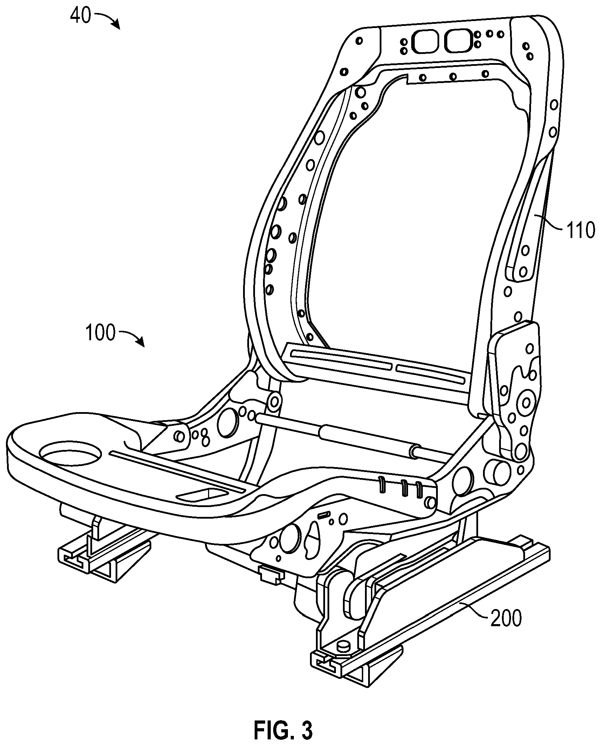

As shown in FIGS. 2 and 3, each of the seats 40 includes a plurality of padded components (e.g., a seat back pad or cushion, a seat bottom pad or cushion, etc.), shown as seat cushions 50, and a framing assembly, shown as frame assembly 100. As shown in FIG. 3, the frame assembly 100 includes (i) a first frame portion, shown as seat frame assembly 110, configured to support the seat cushions 50 and (ii) a second frame portion, shown as track assembly 200, configured to support and couple to the seat frame assembly 110 and, thereby, couple the seat 40 to the cabin floor 30. According to an exemplary embodiment, the track assembly 200 is adjustable (e.g., manually adjustable, electronically adjustable, etc.) such that the position of the seat 40 can be selectively adjusted (e.g., the seat 40 can be slid forward, rearward, etc.).

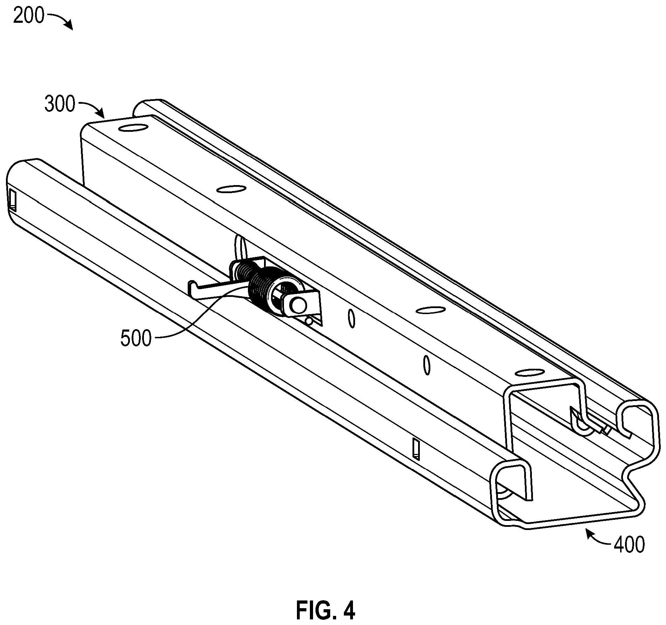

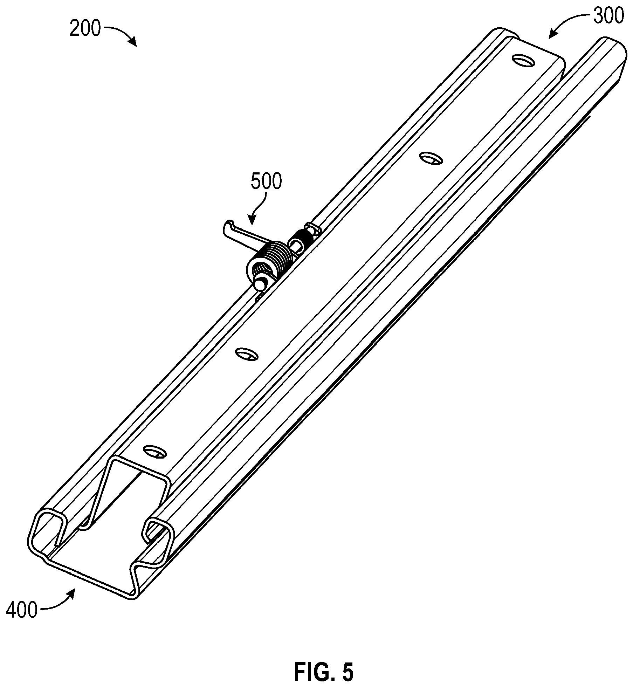

As shown in FIGS. 4-7, the track assembly 200 includes a first track, shown as upper rail 300, a second track, shown as lower rail 400, a securing mechanism, shown as latch assembly 500, and a plurality of sliding couplers, shown as carriage assemblies 600. According to an exemplary embodiment, the latch assembly 500 is configured to selectively secure or lock the upper rail 300 in a desired position along the lower rail 400 and prevent relative movement therebetween. According to an exemplary embodiment, the carriage assemblies 600 are configured to slidably couple the upper rail 300 to the lower rail 400 and facilitate translational or sliding movement therebetween (i.e., when the latch assembly 500 is disengaged).

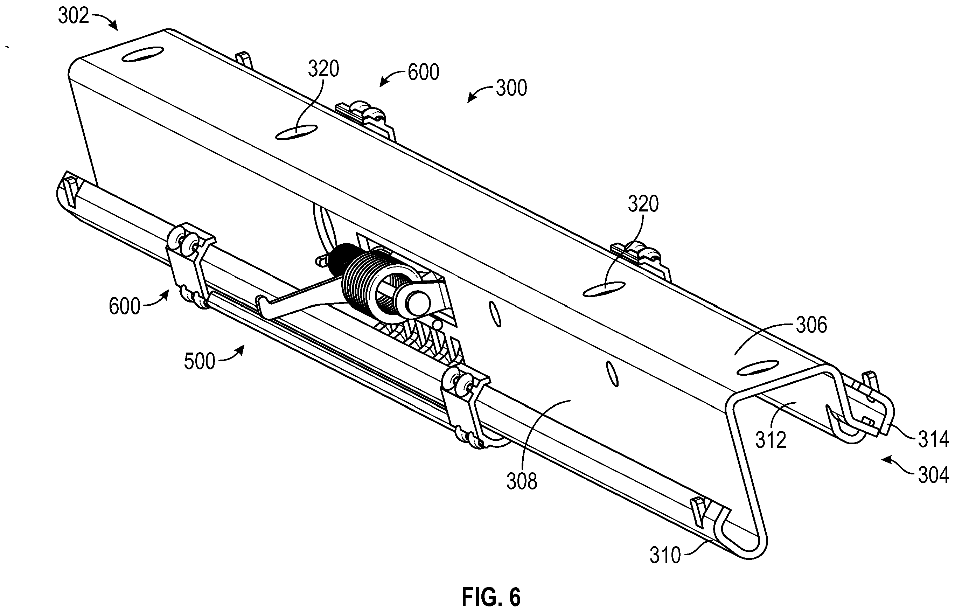

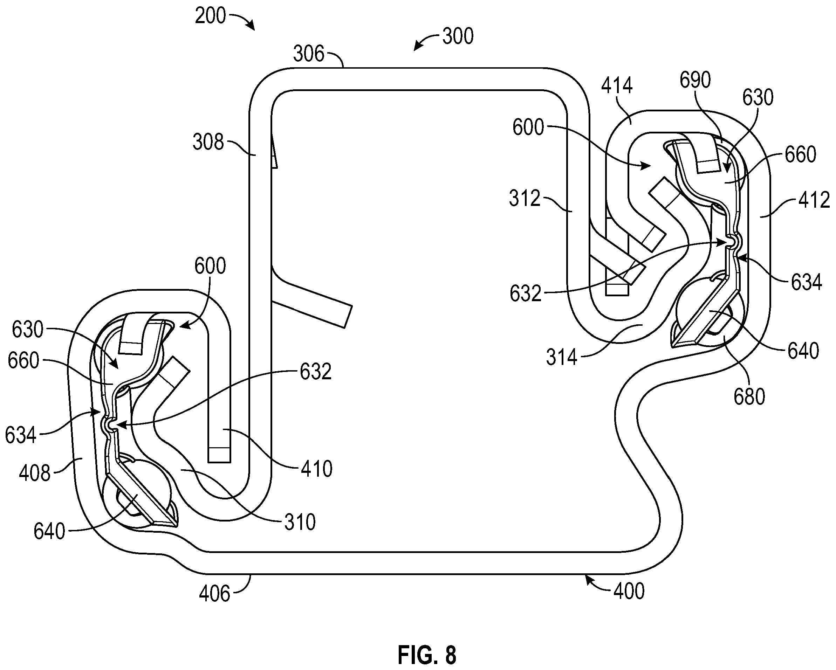

As shown in FIGS. 6 and 8, the upper rail 300 has (i) a first end, shown as end 302, and an opposing second end, shown as end 304, that are spaced longitudinally apart and (ii) a cross-sectional profile defined by (a) a first wall, shown as top wall 306, (b) a second wall, shown as first sidewall 308, extending downward from a first side of the top wall 306 and terminating with a first lip, shown as first flange 310, and (c) a third wall, shown as second sidewall 312, extending downward from an opposing second side of the top wall 306 and terminating with a second lip, shown as second flange 314. According to the exemplary embodiment shown in FIGS. 6 and 8, the first sidewall 308 is longer or taller than the second sidewall 312 such that the cross-sectional profile is non-uniform or non-symmetrical (e.g., an "r" shaped profile, etc.). In other embodiments, the cross-sectional profile is uniform or symmetrical.

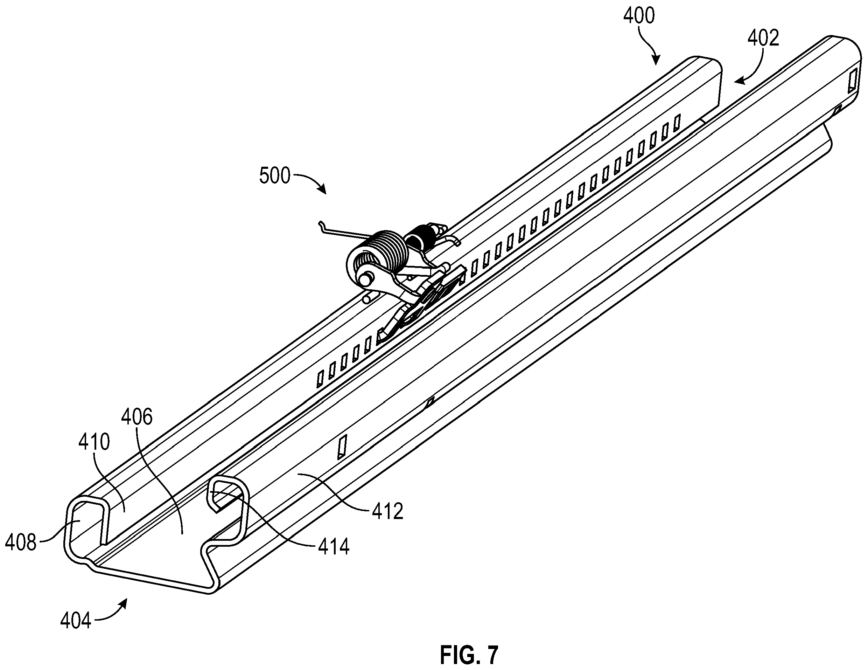

As shown in FIGS. 7 and 8, the lower rail 400 has (i) a first end, shown as end 402, and an opposing second end, shown as end 404, that are spaced longitudinally apart and (ii) a cross-sectional profile defined by (a) a first wall, shown as bottom wall 406, (b) a second wall, shown as first sidewall 408, extending upward from a first side of the bottom wall 406 and terminating with a first lip, shown as first flange 410, and (c) a third wall, shown as second sidewall 412, extending upward from an opposing second side of the bottom wall 406 and terminating with a second lip, shown as second flange 414. According to the exemplary embodiment shown in FIGS. 7 and 8, the second sidewall 412 is longer or taller than the first sidewall 408 such that the cross-sectional profile is non-uniform or non-symmetrical. In other embodiments, the cross-sectional profile is uniform or symmetrical.

As shown in FIG. 6, the top wall 306 of the upper rail 300 defines a plurality of apertures, shown as attachment apertures 320. According to an exemplary embodiment, the attachment apertures 320 are configured to facilitate coupling the upper rail 300, and thereby the track assembly 200, to the seat frame assembly 110 of the frame assembly 100 of the seat 40 using fasteners (e.g., bolts, screws, rivets, etc.). In other embodiments, the upper rail 300 is welded or otherwise coupled to the seat frame assembly 110. According to an exemplary embodiment, the bottom wall 406 of the lower rail 400 defines a plurality of apertures (e.g., similar to the attachment apertures 320). The plurality of apertures of the bottom wall 406 are configured to facilitate coupling the lower rail 400, and thereby the seat 40, to the cabin floor 30 of the vehicle 10. In other embodiments, the lower rail 400 is welded or otherwise coupled to the cabin floor 30 of the vehicle 10.

As shown in FIG. 8, (i) the first flange 410 of the lower rail 400 receives the first flange 310 of the upper rail 300 and (ii) the second flange 414 of the lower rail 400 receives the second flange 314 of the upper rail 300, thereby coupling the lower rail 400 and the upper rail 300 together. A first carriage assembly 600 is positioned between the first sidewall 408 of the lower rail 400 and the first flange 310 of the upper rail 300. A second carriage assembly 600 is positioned between the second sidewall 412 of the lower rail 400 and the second flange 314 of the upper rail 300. The first carriage assembly 600 and the second carriage assembly 600 slidably couple the lower rail 400 and the upper rail 300 together.

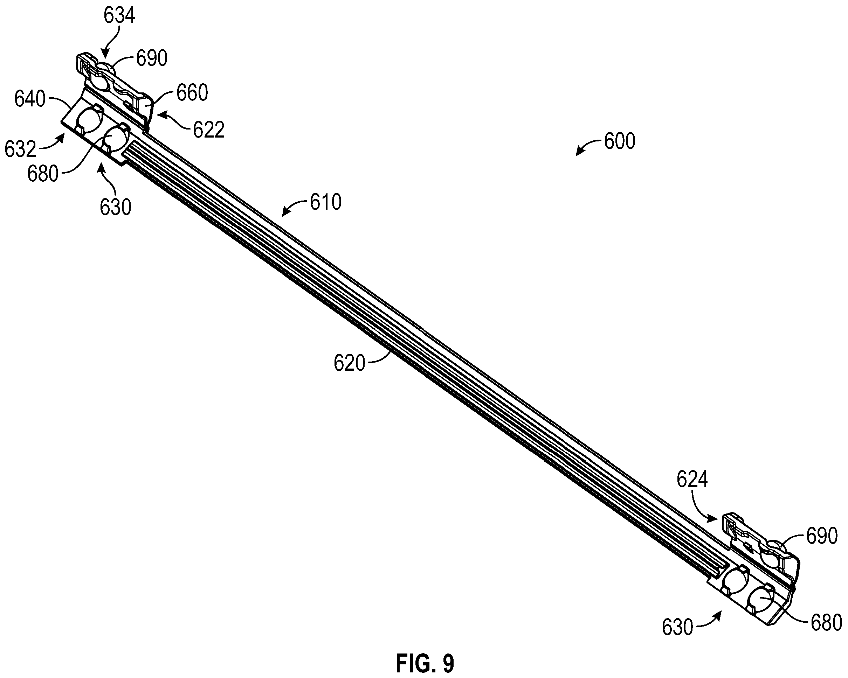

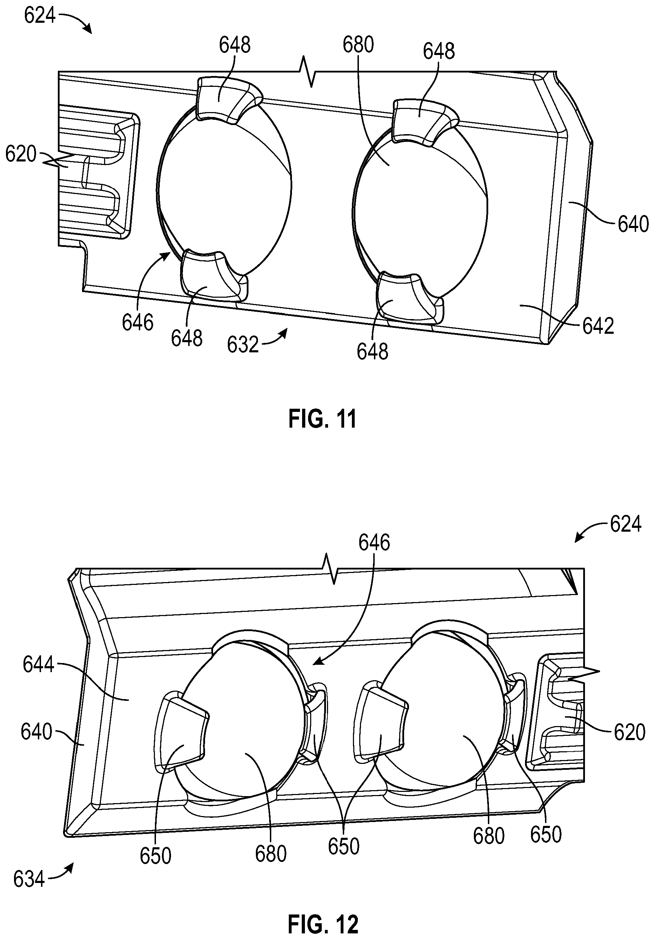

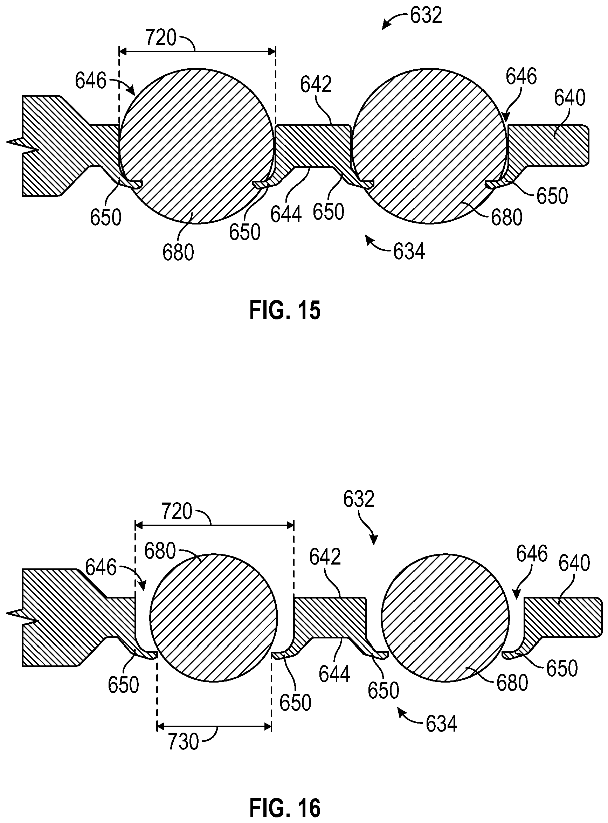

As shown in FIGS. 9-16, the carriage assembly 600 includes a bearing support, shown as carriage 610, that supports a first plurality of bearings, shown as lower ball bearings 680, and a second plurality bearings, shown as upper ball bearings 690. As shown in FIGS. 8-12, the carriage 610 includes (i) an elongated body or member, shown as slide rail 620, having a first end, shown as end 622, and an opposing second end, shown as end 624, and (ii) a pair of bearing holders or flanges, shown as bearing flanges 630, with a respective one of the bearing flanges 630 positioned at each of the end 622 and the end 624 of the slide rail 620. As shown in FIGS. 8-16, the bearing flanges 630 have a first side, shown as inner side 632, and an opposing side, shown as outer side 634. As shown in FIG. 8, the inner side 632 of the bearing flanges 630 faces the first flange 310 and the second flange 314 of the upper rail 300, and the outer side 634 of the bearing flanges 630 faces the first sidewall 408 and the second sidewall 412 of the lower rail 400.

As shown in FIGS. 8-16, each of the bearing flanges 630 includes (i) a first or lower portion, shown as lower pocket body 640, coupled to the end 622 and the end 624 of the slide rail 620 and (ii) a second or upper portion, shown as upper pocket body 660, extending from the lower pocket body 640. According to the exemplary embodiment shown in FIGS. 8, 9, 13, and 14, the upper pocket body 660 extends from the lower pocket body 640 at an angle such that the bearing flanges 630 have a curved or cup-like cross-sectional shape that corresponds to the shapes and profiles of the first sidewall 408 of the lower rail 400, the second sidewall 412 of the lower rail 400, the first flange 310 of the upper rail 300, and the second flange 314 of the upper rail 300.

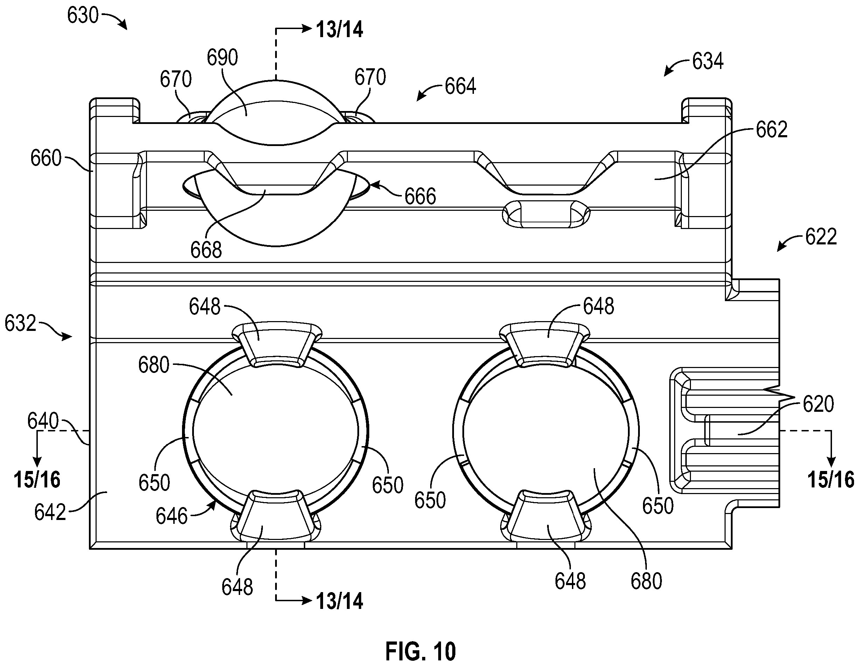

As shown in FIGS. 10-16, the lower pocket body 640 of the bearing flanges 630 includes a first face, shown as inner face 642, and an opposing second face, shown as outer face 644. As shown in FIGS. 10-16, the lower pocket body 640 defines one or more first interfaces or apertures, shown as lower pockets 646, that receive the lower ball bearings 680. According to the exemplary embodiment shown in FIGS. 10-12, 15, and 16, the lower pocket body 640 defines two lower pockets 646. In other embodiments, the lower pocket body 640 defines a different number of the lower pockets 646 (e.g., one, three, four, etc.). As shown in FIGS. 10, 11, 13, and 14, the lower pocket body 640 includes one or more first retainers or tabs, shown as lower inner snaps 648, protruding outward from the inner face 642 thereof and extending at least partially over each of the lower pockets 646. As shown in FIGS. 10, 12, 15, and 16, the lower pocket body 640 includes one or more second retainers or tabs, shown as lower outer snaps 650, protruding outward from the outer face 644 thereof and extending at least partially over each of the lower pockets 646. As shown in FIGS. 10-16, the lower inner snaps 648 and the lower outer snaps 650 are configured (e.g., positioned, shaped, curved, etc.) to retain the lower ball bearings 680 within the lower pockets 646.

According to the exemplary embodiment shown in FIGS. 10-12, the lower pocket body 640 includes (i) two lower inner snaps 648 positioned on opposing vertical sides of the lower pockets 646 and (ii) two lower outer snaps 650 positioned on opposing horizontal sides of the lower pockets 646 such that the lower outer snaps 650 are rotationally offset (e.g., 90 degrees) from the lower inner snaps 648. In other embodiments, the two lower inner snaps 648 are positioned on opposing horizontal sides of the lower pockets 646 and the two lower outer snaps 650 are positioned on opposing vertical sides of the lower pockets 646. In still other embodiments, the lower pocket body 640 includes a different number of the lower inner snaps 648 (e.g., one, three, four, etc.) and/or the lower outer snaps 650 (e.g., one, three, four, etc.) positioned about the lower pockets 646. In such embodiments, the lower pocket body 640 may include a first number of lower inner snaps 648 positioned about the lower pockets 646 and a second, different number of lower outer snaps 650 positioned about the lower pockets 646. In an alternative embodiment, the lower pocket body 640 does not include one of the lower inner snaps 648 or the lower outer snaps 650.

As shown in FIGS. 10, 13, and 14, the upper pocket body 660 of the bearing flanges 630 includes a first face, shown as inner face 662, and an opposing second face, shown as outer face 664. As shown in FIGS. 10, 13, and 14, the upper pocket body 660 defines one or more first interfaces or apertures, shown as upper pockets 666, that receive the upper ball bearings 690. According to the exemplary embodiment shown in FIG. 10, the upper pocket body 660 defines a single upper pocket 666. In other embodiments, the upper pocket body 660 defines a different number of the upper pockets 666 (e.g., two, three, four, etc.). As shown in FIGS. 10, 13, and 14, the upper pocket body 660 includes one or more third retainers or tabs, shown as upper inner snaps 668, protruding outward from the inner face 662 thereof and extending at least partially over each of the upper pockets 666. As shown in FIG. 10, the upper pocket body 660 includes one or more fourth retainers or tabs, shown as upper outer snaps 670, protruding outward from the outer face 664 thereof and extending at least partially over each of the upper pockets 666. As shown in FIGS. 10, 13, and 14, the upper inner snaps 668 and the upper outer snaps 670 are configured (e.g., positioned, shaped, curved, etc.) to retain the upper ball bearings 690 within the upper pockets 666.

According to the exemplary embodiment shown in FIGS. 10, 13, and 14, the upper pocket body 660 includes (i) two upper inner snaps 668 positioned on opposing vertical sides of the upper pockets 666 and (ii) two upper outer snaps 670 positioned on opposing horizontal sides of the upper pockets 666 such that the upper outer snaps 670 are rotationally offset (e.g., 90 degrees) from the upper inner snaps 668. In other embodiments, the two upper inner snaps 668 are positioned on opposing horizontal sides of the upper pockets 666 and the two upper outer snaps 670 are positioned on opposing vertical sides of the upper pockets 666. In still other embodiments, the upper pocket body 660 includes a different number of the upper inner snaps 668 (e.g., one, three, four, etc.) and/or the upper outer snaps 670 (e.g., one, three, four, etc.). In such embodiments, the upper pocket body 660 may include a first number of upper inner snaps 668 and a second, different number of upper outer snaps 670. In an alternative embodiment, the upper pocket body 660 does not include one of the upper inner snaps 668 or the upper outer snaps 670.

As shown in FIG. 8, (i) one of the carriage assemblies 600 is positioned (e.g., pressed, sandwiched, disposed, etc.) between the first sidewall 408 of the lower rail 400 and the first flange 310 of the upper rail 300 where (a) the outer side 634 of the bearing flanges 630 faces the first sidewall 408 of the lower rail 400 and (b) the inner side 632 of the bearing flanges 630 faces the first flange 310 of the upper rail 300 and (ii) one of the carriage assemblies 600 is positioned (e.g., pressed, sandwiched, disposed, etc.) between the second sidewall 412 of the lower rail 400 and the second flange 314 of the upper rail 300 where (a) the outer side 634 of the bearing flanges 630 faces the second sidewall 412 of the lower rail 400 and (b) the inner side 632 of the bearing flanges 630 faces the second flange 314 of the upper rail 300. The lower ball bearings 680 and the upper ball bearings 690 engage with (i) the first sidewall 408 of the lower rail 400 and the first flange 310 of the upper rail 300 and (ii) the second sidewall 412 of the lower rail 400 and the second flange 314 of the upper rail 300 to facilities sliding or translating movement of the upper rail 300 relative to the lower rail 400.

To ensure there is no looseness in the track assembly 200, the lower ball bearings 680 and the upper ball bearings 690 must be under depression for the entire range of the profiles of the upper rails 300 and the lower rails 400. Such depression, however, cannot be too much as this will increase sliding efforts. In addition, the profiles of the upper rails 300 and the lower rails 400 may slightly vary during the manufacturing process and/or the profiles of the upper rails 300 and the lower rails 400 may slightly vary for different applications. Typically, to accommodate such variations, track manufacturers select the diameter of ball bearings based on the profile variation, which forces them to design, manufacture, and stock/manage inventory of a variety of different carriages to accommodate the range of bearing diameters.

According to an exemplary embodiment, (i) the lower pockets 646, the lower inner snaps 648, and the lower outer snaps 650 and (ii) the upper pockets 666, the upper inner snaps 668, and the upper outer snaps 670 are configured (e.g., sized, shaped, flexible, etc.) to accommodate a wide range of bearing diameters, thereby facilitating the manufacturing, stocking, and managing of a single carriage design (i.e., the carriage 610). Specifically, with the carriage 610, a track manufacturer can simply (i) identify what diameter of the lower ball bearings 680 and the upper ball bearings 690 are needed to accommodate the profiles of a respective upper rail 300 and a respective lower rail 400 (which diameters may be the same or different), (ii) insert the lower ball bearings 680 into the lower pockets 646 by pressing the lower ball bearings 680 against either the lower inner snaps 648 or the lower outer snaps 650 (which are configured to flex inward under such pressure) until the lower ball bearings 680 drop into the lower pockets 646, and (iii) insert the upper ball bearings 690 into the upper pockets 666 by pressing the upper ball bearings 690 (which may be the same as or different than the lower ball bearings 680) against either the upper inner snaps 668 or the upper outer snaps 670 (which are configured to flex inward under such pressure) until the upper ball bearings 690 drop into the upper pockets 666. Once inserted, (i) the lower inner snaps 648 and the lower outer snaps 650 and (ii) the upper inner snaps 668 and the upper outer snaps 670 are configured to secure and hold the lower ball bearings 680 and the upper ball bearings 690, respectively, within the lower pockets 646 and the upper pockets 666, while still permitting free rotation of the largest diameter bearings and retaining the smallest diameter bearings.

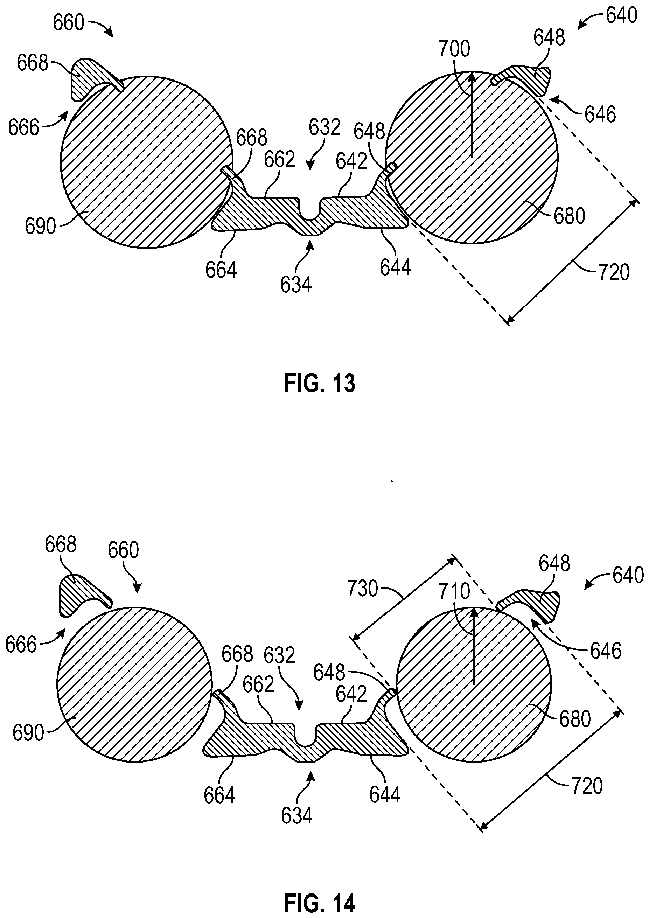

As shown in FIGS. 13-16, (i) each of the lower pockets 646 define a first diameter, shown as maximum pocket diameter 720, and (ii) the lower inner snaps 648 and the lower outer snaps 650 of each respective lower pocket 646 define a second diameter, shown as minimum pocket diameter 730, which is defined between the free ends of the opposing lower inner snaps 648 and the free ends of the opposing lower outer snaps 650. In some embodiments, the shape and size of the lower inner snaps 648 and the lower outer snaps 650 are the same such that the distance between the free ends of the opposing lower inner snaps 648 and the distance between the free ends of the opposing lower outer snaps 650 are the same. In other embodiments, the shape and size of the lower inner snaps 648 and the lower outer snaps 650 are different or varied such that the distance between the free ends of the opposing lower inner snaps 648 and the distance between the free ends of the opposing lower outer snaps 650 are not the same. According to an exemplary embodiment, the maximum pocket diameter 720 is about 5.4 mm (e.g., slightly greater than about 5.4 mm, 5.419 mm, 5.451 mm, between 5.4 mm and 5.5 mm, etc.) and the minimum pocket diameter 730 is about 4.0 mm (e.g., slightly less than about 4.0 mm, 3.924 mm, 3.936 mm, between 3.9 mm and 4.1 mm, etc.).

As shown in FIG. 13, the maximum pocket diameter 720 of the lower pockets 646 is configured to accommodate a lower ball bearing 680 having a first diameter, shown as maximum bearing diameter 700. As shown in FIG. 14, the minimum pocket diameter 730 of the lower pockets 646 is configured to accommodate a lower ball bearing 680 having a second diameter, shown as minimum bearing diameter 710. According to an exemplary embodiment, the maximum bearing diameter 700 is about 5.4 mm and the minimum bearing diameter 710 is about 4.6 mm. In other embodiments, the maximum bearing diameter 700 is larger or smaller and/or minimum bearing diameter 710 is larger or smaller based on the design of the lower pockets 646, the lower inner snaps 648, and/or the lower outer snaps 650 (i.e., the maximum pocket diameter 720 and/or the minimum pocket diameter 730).

Further, it should be understood that the disclosure herein regarding (i) the maximum bearing diameter 700 of the lower ball bearings 680, (ii) the minimum bearing diameter 710 of the lower ball bearings 680, (iii) the maximum pocket diameter 720 defined by the lower pockets 646, and (iv) the minimum pocket diameter 730 defined by the lower inner snaps 648 and the lower outer snaps 650 may similarly apply to the upper ball bearings 690, the upper pockets 666, the upper inner snaps 668, and the upper outer snaps 670. However, it should be understood that the maximum pocket diameter 720 and/or the minimum pocket diameter 730 of the lower pockets 646 and the upper pockets 666 (i) may be the same such that the lower pockets 646 and the upper pockets 666 accommodate the same range of bearing diameters or (ii) may be different such that the lower pockets 646 and the upper pockets 666 accommodate a different range of bearing diameters.

As utilized herein, the terms "approximately," "about," "substantially", and similar terms are intended to have a broad meaning in harmony with the common and accepted usage by those of ordinary skill in the art to which the subject matter of this invention pertains. It should be understood by those of skill in the art who review this invention that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The term "or," as used herein, is used in its inclusive sense (and not in its exclusive sense) so that when used to connect a list of elements, the term "or" means one, some, or all of the elements in the list. Language such as the phrases "at least one of X, Y, and Z" and "at least one of X, Y, or Z," unless specifically stated otherwise, are understood to convey that an element may be either X; Y; Z; X and Y; X and Z; Y and Z; or X, Y, and Z (i.e., any combination of X, Y, and Z). Thus, such language is not generally intended to imply that certain embodiments require at least one of X, at least one of Y, and at least one of Z to each be present, unless otherwise indicated.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present invention, as long as the resulting subject matter belongs to the scope defined by the appended claims.

It is important to note that the construction and arrangement of the seat 40 and components thereof (e.g., the frame assembly 100, the track assembly 200, etc.) as shown in the various exemplary embodiments is illustrative only. Additionally, any element disclosed in one embodiment may be incorporated or utilized with any other embodiment disclosed herein, as long as the carriage belongs to the scope which is defined by the appended claims.

## Claims

1. A carriage (600) for a seat track assembly (200), the carriage comprising:
an elongated body (620) having a first end (622) and an opposing second end (624); and
a flange (630) coupled to the first end of the elongated body, the flange including:
a first portion (640) having a first face (642) and an opposing second face (644), the first portion (640) defining a first aperture (646) having a first diameter (720), the first portion including (i) at least two first retainers (648) protruding outward from the first face and extending at least partially over the first aperture and (ii) at least two second retainers (650) protruding outward from the opposing second face (644) and extending at least partially over the first aperture (646), the at least two first retainers and the at least two second retainers (648, 650) defining a second diameter (730) that is less than the first diameter (720); and
a second portion (660) extending from the first portion (640) at an angle, the second portion having a third face (662) and an opposing fourth face (664), the second portion defining a second aperture (666) having a third diameter, the second portion including (i) at least two third retainers (668) protruding outward from the third face and extending at least partially over the second aperture (666) and (ii) at least two fourth retainers (670) protruding outward from the opposing fourth face (664) and extending at least partially over the second aperture (666), the at least two third retainers and the at least two fourth retainers (668, 670) defining a fourth diameter that is less than the third diameter,
wherein the at least two first retainers (648) include only two first retainers and the at least two second retainers (648, 650) include only two second retainers, and wherein the two first retainers (648) are rotationally offset 90 degrees relative to the two second retainers (650).

2. The carriage (600) of Claim 1, wherein the two first retainers (648) are positioned on opposing sides of the first aperture (646) and the two second retainers (650) are positioned on opposing sides of the first aperture (646).

3. The carriage (600) of Claim 1 or Claim 2, wherein the first diameter (720) is the same as the third diameter.

4. The carriage (600) of any preceding Claim, wherein the first diameter (720) is different from the third diameter.

5. The carriage (600) of any preceding Claim, wherein the second diameter (730) is the same as the fourth diameter.

6. The carriage (600) of any preceding Claim, wherein the second diameter (730) is different than the fourth diameter.

7. The carriage (600) of any preceding Claim, wherein the first diameter (720) is about 5.4 mm.

8. The carriage (600) of any preceding Claim, wherein the second diameter (730) is about 4.0 mm.

9. The carriage (600) of any preceding Claim, wherein the first portion (640) defines a third aperture (646) adjacent the first aperture (646), wherein the first portion includes (i) at least two fifth retainers (648) protruding outward from the first face (642) and extending at least partially over the third aperture and (ii) at least two sixth retainers (650) protruding outward from the opposing second face (644) and extending at least partially over the third aperture.

10. The carriage (600) of Claim 9, wherein the third aperture has the first diameter (720), and wherein the at least two fifth retainers and the at least two sixth retainers define the second diameter (730).

11. The carriage (600) of any preceding Claim, wherein the flange (630) is a first flange, further comprising a second flange (630) coupled to the opposing second end (624) of the elongated body (620).

12. The carriage (600) of Claim 11, wherein the second flange (630) is the same as the first flange (630).

## Patentansprüche

1. Schlitten (600) für einen Sitzschienenzusammenbau (200), wobei der Schlitten Folgendes umfasst:
einen länglichen Körper (620), der ein erstes Ende (622) und ein gegenüberliegendes zweites Ende (624) aufweist; und
einen Flansch (630), der an das erste Ende des länglichen Körpers gekoppelt ist, wobei der Flansch Folgendes beinhaltet:
einen ersten Abschnitt (640), der eine erste Fläche (642) und eine gegenüberliegende zweite Fläche (644) aufweist, wobei der erste Abschnitt (640) eine erste Öffnung (646) definiert, die einen ersten Durchmesser (720) aufweist, wobei der erste Abschnitt (i) mindestens zwei erste Halterungen (648), die aus der ersten Fläche nach außen vorstehen und sich mindestens teilweise über die erste Öffnung erstrecken, und (ii) mindestens zwei zweite Halterungen (650), die aus der gegenüberliegenden zweiten Fläche (644) nach außen vorstehen und sich mindestens teilweise über die erste Öffnung (646) erstrecken, beinhaltet, wobei die mindestens zwei ersten Halterungen und die mindestens zwei zweiten Halterungen (648, 650) einen zweiten Durchmesser (730) definieren, der kleiner ist als der erste Durchmesser (720); und
einen zweiten Abschnitt (660), der sich abgewinkelt von dem ersten Abschnitt (640) erstreckt, wobei der zweite Abschnitt eine dritte Fläche (662) und eine gegenüberliegende vierte Fläche (664) aufweist, wobei der zweite Abschnitt eine zweite Öffnung (666) definiert, die einen dritten Durchmesser aufweist, wobei der zweite Abschnitt (i) mindestens zwei dritte Halterungen (668), die aus der dritten Fläche nach außen vorstehen und sich mindestens teilweise über die zweite Öffnung (666) erstrecken, und (ii) mindestens zwei vierte Halterungen (670), die aus der gegenüberliegenden vierten Fläche (664) nach außen vorstehen und sich mindestens teilweise über die zweite Öffnung (666) erstrecken, beinhaltet, wobei die mindestens zwei dritten Halterungen und die mindestens zwei vierten Halterungen (668, 670) einen vierten Durchmesser definieren, der kleiner ist als der dritte Durchmesser,
wobei die mindestens zwei ersten Halterungen (648) nur zwei erste Halterungen beinhalten und die mindestens zwei zweiten Halterungen (648, 650) nur zwei zweite Halterungen beinhalten und wobei die zwei ersten Halterungen (648) in Bezug auf die zwei zweiten Halterungen (650) um 90 Grad rotationsversetzt sind.

2. Schlitten (600) nach Anspruch 1, wobei die zwei ersten Halterungen (648) auf gegenüberliegenden Seiten der ersten Öffnung (646) positioniert sind und die zwei zweiten Halterungen (650) auf gegenüberliegenden Seiten der ersten Öffnung (646) positioniert sind.

3. Schlitten (600) nach Anspruch 1 oder Anspruch 2, wobei der erste Durchmesser (720) derselbe wie der dritte Durchmesser ist.

4. Schlitten (600) nach einem vorhergehenden Anspruch, wobei sich der erste Durchmesser (720) von dem dritten Durchmesser unterscheidet.

5. Schlitten (600) nach einem vorhergehenden Anspruch, wobei der zweite Durchmesser (730) derselbe wie der vierte Durchmesser ist.

6. Schlitten (600) nach einem vorhergehenden Anspruch, wobei sich der zweite Durchmesser (730) von dem vierten Durchmesser unterscheidet.

7. Schlitten (600) nach einem vorhergehenden Anspruch, wobei der erste Durchmesser (720) ungefähr 5,4 mm beträgt.

8. Schlitten (600) nach einem vorhergehenden Anspruch, wobei der zweite Durchmesser (730) ungefähr 4,0 mm beträgt.

9. Schlitten (600) nach einem vorhergehenden Anspruch, wobei der erste Abschnitt (640) eine dritte Öffnung (646) neben der ersten Öffnung (646) definiert, wobei der erste Abschnitt (i) mindestens zwei fünfte Halterungen (648), die aus der ersten Fläche (642) nach außen vorstehen und sich mindestens teilweise über die dritte Öffnung erstrecken, und (ii) mindestens zwei sechste Halterungen (650), die aus der gegenüberliegenden zweiten Fläche (644) nach außen vorstehen und sich mindestens teilweise über die dritte Öffnung erstrecken, beinhaltet.

10. Schlitten (600) nach Anspruch 9, wobei die dritte Öffnung den ersten Durchmesser (720) aufweist und wobei die mindestens zwei fünften Halterungen und die mindestens zwei sechsten Halterungen den zweiten Durchmesser (730) definieren.

11. Schlitten (600) nach einem vorhergehenden Anspruch, wobei der Flansch (630) ein erster Flansch ist, der ferner einen zweiten Flansch (630) umfasst, der an das gegenüberliegende zweite Ende (624) des länglichen Körpers (620) gekoppelt ist.

12. Schlitten (600) nach Anspruch 11, wobei der zweite Flansch (630) derselbe ist wie der erste Flansch (630).

## Revendications

1. Chariot (600) pour un ensemble glissière de siège (200), le chariot comprenant :
un corps allongé (620) ayant une première extrémité (622) et une deuxième extrémité opposée (624) ; et
une bride (630) couplée à la première extrémité du corps allongé, la bride incluant :
une première partie (640) ayant une première face (642) et une deuxième face opposée (644), la première partie (640) définissant une première ouverture (646) ayant un premier diamètre (720), la première partie incluant (i) au moins deux premiers éléments de retenue (648) faisant saillie vers l'extérieur à partir de la première face et s'étendant au moins partiellement au-dessus de la première ouverture et (ii) au moins deux deuxièmes éléments de retenue (650) faisant saillie vers l'extérieur à partir de la deuxième face opposée (644) et s'étendant au moins partiellement au-dessus de la première ouverture (646), les au moins deux premiers éléments de retenue et les au moins deux deuxièmes éléments de retenue (648, 650) définissant un deuxième diamètre (730) qui est inférieur au premier diamètre (720) ; et
une deuxième partie (660) s'étendant à partir de la première partie (640) selon un angle, la deuxième partie ayant une troisième face (662) et une quatrième face opposée (664), la deuxième partie définissant une deuxième ouverture (666) ayant un troisième diamètre, la deuxième partie incluant (i) au moins deux troisièmes éléments de retenue (668) faisant saillie vers l'extérieur à partir de la troisième face et s'étendant au moins partiellement au-dessus de la deuxième ouverture (666) et (ii) au moins deux quatrièmes éléments de retenue (670) faisant saillie vers l'extérieur à partir de la quatrième face opposée (664) et s'étendant au moins partiellement au-dessus de la deuxième ouverture (666), les au moins deux troisièmes éléments de retenue et les au moins deux quatrièmes éléments de retenue (668, 670) définissant un quatrième diamètre qui est inférieur au troisième diamètre,
dans lequel les au moins deux premiers éléments de retenue (648) incluent seulement deux premiers éléments de retenue et les au moins deux deuxièmes éléments de retenue (648, 650) incluent seulement deux deuxièmes éléments de retenue, et dans lequel les deux premiers éléments de retenue (648) sont décalés en rotation de 90 degrés par rapport aux deux deuxièmes éléments de retenue (650).

2. Chariot (600) selon la revendication 1, dans lequel les deux premiers éléments de retenue (648) sont positionnés sur des côtés opposés de la première ouverture (646) et les deux deuxièmes éléments de retenue (650) sont positionnés sur des côtés opposés de la première ouverture (646).

3. Chariot (600) selon la revendication 1 ou la revendication 2, dans lequel le premier diamètre (720) est identique au troisième diamètre.

4. Chariot (600) selon l'une quelconque des revendications précédentes, dans lequel le premier diamètre (720) est différent du troisième diamètre.

5. Chariot (600) selon l'une quelconque des revendications précédentes, dans lequel le deuxième diamètre (730) est identique au quatrième diamètre.

6. Chariot (600) selon l'une quelconque des revendications précédentes, dans lequel le deuxième diamètre (730) est différent du quatrième diamètre.

7. Chariot (600) selon l'une quelconque des revendications précédentes, dans lequel le premier diamètre (720) est d'environ 5,4 mm.

8. Chariot (600) selon l'une quelconque des revendications précédentes, dans lequel le deuxième diamètre (730) est d'environ 4,0 mm.

9. Chariot (600) selon l'une quelconque des revendications précédentes, dans lequel la première partie (640) définit une troisième ouverture (646) adjacente à la première ouverture (646), dans lequel la première partie inclut (i) au moins deux cinquièmes éléments de retenue (648) faisant saillie vers l'extérieur à partir de la première face (642) et s'étendant au moins partiellement au-dessus de la troisième ouverture et (ii) au moins deux sixièmes éléments de retenue (650) faisant saillie vers l'extérieur à partir de la deuxième face opposée (644) et s'étendant au moins partiellement au-dessus de la troisième ouverture.

10. Chariot (600) selon la revendication 9, dans lequel la troisième ouverture présente le premier diamètre (720), et dans lequel les au moins deux cinquièmes éléments de retenue et les au moins deux sixièmes éléments de retenue définissent le deuxième diamètre (730).

11. Chariot (600) selon l'une quelconque des revendications précédentes, dans lequel la bride (630) est une première bride, comprenant en outre une deuxième bride (630) couplée à la deuxième extrémité opposée (624) du corps allongé (620).

12. Chariot (600) selon la revendication 11, dans lequel la deuxième bride (630) est identique à la première bride (630).
